# EUROPÄISCHE PATENTSCHRIFT

(11) **EP 2 271 687 B1**
(45) Veröffentlichungstag und Bekanntmachung des Hinweises auf die Patenterteilung: **22.05.2013**
(21) Anmeldenummer: 09738106.5
(22) Anmeldetag: 27.04.2009
(51) Int. Cl.: C08G 18/10, C08G 18/22, C08G 18/48, C09J 175/08

(54) **HÄRTBARE ZUSAMMENSETZUNGEN AUF BASIS SILYLIERTER POLYURETHANE**
HARDENABLE COMPOSITIONS BASED ON SILYLATED POLYURETHANES
COMPOSITIONS DURCISSABLES À BASE DE POLYURÉTHANES SILYLÉS

(30) Priorität: 28.04.2008 DE 102008021221
(43) Veröffentlichungstag der Anmeldung: 12.01.2011
(73) Patentinhaber: Henkel AG & Co. KGaA, 40589 Düsseldorf (DE)
(72) Erfinder: KLEIN, Johann, 40593 Düsseldorf (DE); GONZALEZ, Sara, 08172 Barcelona (ES); ZANDER, Lars, 41569 Rommerskirchen (DE); KUNZE, Christiane, 51061 Köln (DE); BACHON, Thomas, 40597 Düsseldorf (DE); BOLTE, Andreas, 40627 Düsseldorf (DE); MAJOLO, Martin, 41812 Erkelenz (DE); TAMCKE, Thomas, 40593 Düsseldorf (DE)
(86) Internationale Anmeldenummer: PCT/EP2009/055049
(87) Internationale Veröffentlichungsnummer: WO 2009/133062

(56) Entgegenhaltungen:
- EP-A- 1 535 940
- DE-A1- 10 348 555
- US-A1- 2007 060 732

## Beschreibung

Die vorliegende Erfindung betrifft ein Verfahren zur Herstellung von silanvernetzenden, härtbaren Zusammensetzungen und deren Verwendung in Kleb- und Dichtstoffen und Beschichtungsmitteln.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvemetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrades ein Polyether und die reaktiven und vernetzungsfähigen Endgruppen sind Alkoxysilylgruppen. Gegenüber den Polyurethan-Kleb- und Dichtstoffen weisen die modifizierten Silan-Kleb- und Dichtstoffe den Vorteil der Freiheit von Isocyanatgruppen, insbesondere von monomeren Diisocyanaten auf, weiterhin zeichnen sie sich durch ein breites Haftspektrum auf einer Vielzahl von Substraten ohne Oberflächenvorbehandlung durch Primer aus.

US 4,222,925 A und US 3,979,344 A beschreiben bereits bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit, auf.

Für die Herstellung von silanterminierten Prepolymeren auf der Basis von Polyethern sind die nachfolgend aufgeführten Verfahren bereits beschrieben worden:
- Copolymerisation von ungesättigten Monomeren mit solchen, die Alkoxysilylgruppen aufweisen, wie z.B. Vinyltrimethoxysilan.
- Aufpfropfung von ungesättigten Monomeren wie Vinyltrimethoxysilan auf Thermoplaste wie Polyethylen.
- Hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.
- Eine weitere Möglichkeit sieht die Umsetzung von hydroxyfunktionellen Polyethern mit isocyanatofunktionellen Silanen wie z.B. 3-Isocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, EP-A-70475, DE-A-19849817, US-A-6124387, US-A-5990257, US-A-4960844, US-A-3979344, US-A-3632557, DE-A-4029504, EP-A-601021 oder EP-A-370464.

Nach der Lehre der EP-A-397 036 wird ein Polyether erst mit olefinischen Endgruppen, z.B. Allylendgruppen, versehen und dann bevorzugt mit Alkoxyhydridosilanen umgesetzt. Für die Aushärtungsreaktion kann ggf. ein Katalysator verwendet werden, genannt werden beispielsweise Metallsalze von Carbonsäuren wie Alkyltitanate, Zinnoctoate, Dibutylzinndilaurat (DBTL), Aminsalze oder andere saure oder basische Katalysatoren.

EP-A-0931800 beschreibt die Herstellung von silylierten Polyurethanen durch Umsetzung einer Polyolkomponente mit einer endständigen Ungesättigtheit von weniger als 0,02 meq/g mit einem Diisocyanat zu einem Hydroxyl-terminierten Prepolymer, das anschließend mit einem Isocyanatosilan der Formel OCN-R-Si-(X)ₘ(-OR¹)₃₋ₘ verkappt wird, wobei m 0,1 oder 2 ist und jeder R¹-Rest eine Alkylgruppe mit 1 bis 4 C-Atomen und R eine difunktionelle organische Gruppe ist Gemäß der Lehre dieser Schrift soll die Herstellung der silylierten Polyurethane unter wasserfreien Bedingungen, vorzugsweise unter Stickstoffdecker erfolgen, wobei typischerweise Dilalkyzinndicarboxylate als Katalysator verwendet werden.

Die EP-A-1535940 beschreibt ein Verfahren zur Herstellung von organyloxysilylterminlerten Polymeren, die gegenüber Luftfeuchtigkeit erhöhte Stabilität aufweisen, durch Umsetzung von α,ω-dihydroxyterminierten organischen Polymeren mit isocyanatofunktionellen Silanen in Anwesenheit von mindestens einem Katalysator, ausgewählt aus der Gruppe bestehend aus Bismuth- und Zinkverbindungen, und solche Polymere enthaltenden vernetzbaren Massen, die zur Aushärtung Silan-Kondensationskatalysatoren enthalten, genannt werden Dibutylzinndilaurat, Dibutylzinndiacetat, Tetrabutyldimethoxydistannoxan, Lösungen von Dibutylzinnoxid in Methyltrimethoxysilan oder Tetrethoxysilan, Dioctylzinndilaurat, Dioctylzinndiacetat, Tetraoctyldimethoxydistannoxan, Lösungen von Dioctylzinnoxid in Methyltrimethoxysilan oder Tetraethoxysilan, Dibutylzinn-bis(2,4-pentandionat), Dibutylzinnmaleat, Aminopropyltrimethoxysilan und Aminoethylaminopropyltrimethoxysilan sowie saure Katalysatoren, wie organische Carbonsäuren, Phosphorsäuren bzw. Phosphorsäuerester, Säurechloride oder Hydrochloride.

Die US 2007/060732 A1 offenbart zinnfreie feuchtigkeitshärtende lagerstabile silylierte Polyurethane auf Polypropylenglycolbasis für Dichtstoffe, Klebstoffe bzw. Schutzbeschichtungen, die hergestellt werden durch Umsetzung von Polypropylenglycol mit Diisocyanat zum hydroxyl-terminierten bzw. NCO-terminierten Polyurethanprepolymer mittels einer Bismut-Verbindung als Katalysator, das anschliessend mit Isocyanatopropyltrimethoxysilan, bzw. einem Silan mit sekundären Aminogruppen, zum silylierten Prepolymer ohne freie Isocyanatgruppen umgesetzt wird. Neben Bismutverbindungen können auch Zink-, Aluminium- oder Titanverbindungen für die genannte Umsetzung eingesetzt werden. DE 103 48 555 A1 offenbart feuchtigkeitshärtende lagerstabile alkoxysilanterminierte Polymere für Dichtstoffe, Spachtelmassen, Klebstoffe bzw. Beschichtungen auf Basis von Polypropylenglycol und Isocyanatopropyltrimethoxysilan bzw. Isocyanatomethyldimethoxymethylsilan, wobei ein Titan-Katalysator zur Polyurethan Bildung eingesetzt wird. Zur anschließenden Vernetzungsreaktion der Silylgruppen der Polyurethane unter Luftfeuchtigkeit wird eine Titanverbindung und DBU eingesetzt.

Es besteht weiterhin das Bedürfnis nach Isocyanatfreien Zusammensetzungen zur Herstellung von 1 K- oder 2K- Kleb- und Dichtstoffen oder Beschichtungsmitteln, die eine akzeptable Härtungszeit und nach Aushärtung eine besonders gute Elastizität und Dehnbarkeit aufweisen und die frei von organischen Zinnverbindungen sind.

Die erfindungsgemäße Lösung der Aufgabe ist den Patentansprüchen zu entnehmen. Sie besteht im Wesentlichen in der Bereitstellung eines Verfahrens zur Herstellung vernetzbarer Zubereitungen, umfassend:
in einem ersten Schritt die Umsetzung eines oder mehrerer α, w- difunktioneller organischer Polymerer der Formel (1)

   X-A-X (1)
mit organofunktionellen Silanen der Formel (2)

   Y-R-Si-(R¹)ₘ(-C)R²)₃₋ₘ (2)

   in Anwesenheit von Katalysatoren (A), ausgewählt aus der Gruppe bestehend aus Kalium-, Eisen-, Indium-, Zink-, Wismut- (Bismuth-) und Kupferverbindungen, zu organyloxysilylterminierten Polymeren P¹. Dabei ist R ein zweiwertiger, gegebenenfalls substituierter Kohlenwasserstoffrest mit 1 bis 12 Kohlenstoffatomen, der mit Heteroatomen unterbrochen sein kann,
R¹ und R² können gleich oder verschieden sein und bedeuten einwertige, gegebenenfalls substituierte Kohlenwasserstoffreste mit 1 bis 12 Kohlenstoffatomen, die mit Heteroatomen unterbrochen sein können,
A ist ein zweiwertiger, gegebenenfalls substituierter Kohlenwasserstoffrest mit mindestens 6 Kohlenstoffatomen, der mit Heteroatomen unterbrochen sein kann,
m ist gleich 0,1 oder 2, und
X ist eine Hydroxylgruppe und Y eine Isocyanatgruppe oder X ist eine Isocyanatgruppe und Y eine Hydroxylgruppe oder eine primäre oder sekundäre Aminogruppe.
In einem zweiten Schritt werden
die im ersten Schritt erhaltenen Polymere P¹ mit einem Silan-Kondensationskatalysator (B) ausgewählt aus der Gruppe bestehend aus Verbindungen von Elementen der dritten Hauptgruppe des Periodensystems der Elemente und heterocyclischen organischen Aminen, Aminkomplexen der Elementverbindungen oder deren Mischungen, sowie gegebenenfalls weiteren Stoffen (C) vermischt, wobei die Zubereitungen frei von organischen Zinnverbindungen sind, wobei für die eingesetzten Silan- Kondensationskatalysatoren (B) Borverbindungen verwendet werden.

Dabei bedeutet "substituiert", dass mindestens eines der als Hauptkettenglieder in einem Rest vorliegenden Atome mit mindestens einem weiteren Atom, das kein Wasserstoffatom und kein Hauptkettenglied ist, verbunden ist bzw. sein kann. Unter einer "unsubstituierten Kette" ist demzufolge ein Rest zu verstehen, der nur aus einer einzigen Kette besteht und dessen konstituierende Atome nur mit weiteren Kettengliedern und/oder Wasserstoffatomen verbunden sind.

"Mit Heteroatomen unterbrochen" bedeutet, dass die Hauptkette eines Restes mindestens ein von Kohlenstoff verschiedenes Atom als Kettenglied aufweist.

Unter "weiteren Stoffen (C)" sind alle Stoffe zu verstehen, die neben den Polymeren P¹ und dem Silan-Kondensationskatalysator (B) noch zur Herstellung einer erfindungsgemäßen vernetzbaren Zubereitung benötigt werden, wobei weder die Anzahl noch die Identität des Stoffes oder der Stoffe (C) einer Beschränkung unterliegen.

Als α, w- difunktionelle organische Polymere der Formel X-A-X können im Rahmen der vorliegenden Erfindung für X gleich -OH prinzipiell eine Vielzahl von mindestens zwei Hydroxylgruppen tragenden Polymeren eingesetzt werden. Beispielhaft genannt seien Polyesterpolyole, Hydroxylgruppen-haltige Polycaprolactone, Hydroxylgruppen-haltige Polybutadiene, Polyisoprene, Dimerdiole oder OH-terminierte Polydimethylsiloxane sowie deren Hydrierungsprodukte oder auch Hydroxylgruppen-haltige Polyacrylate oder Polymethacrylate.

Bevorzugt handelt es sich bei den organischen Polymeren der Formel (1) um Polymerverbindungen auf der Basis von Polyethern oder Polyestern.

Ganz besonders bevorzugt werden jedoch als Polyole Polyalkylenoxide, insbesondere Polyethylenoxide und/oder Polypropylenoxide.

Polyole, die Polyether als Polymergerüst enthalten, besitzen nicht nur an den Endgruppen, sondern auch im Polymerrückgrat eine flexible und elastische Struktur. Damit kann man Zusammensetzungen herstellen, die nochmals verbesserte elastische Eigenschaften aufweisen. Dabei sind Polyether nicht nur in ihrem Grundgerüst flexibel, sondern gleichzeitig beständig. So werden Polyether beispielsweise von Wasser und Bakterien, im Gegensatz zu beispielsweise Polyestern, nicht angegriffen oder zersetzt.

Besonders bevorzugt werden daher Polyethylenoxide und/oder Polypropylenoxide eingesetzt.

Nach einer weiteren bevorzugten Ausführungsform der erfindungsgemäß zu verwendenden Polyolverbindungen X-A-X beträgt das Molekulargewicht Mₙ zwischen 500 und 20 000 g/mol (Dalton), wobei die terminale Ungesättigtheit kleiner als 0,05 meq/g, bevorzugt kleiner als 0,04 meq/g und besonders bevorzugt kleiner als 0,02 meq/g ist.

Diese Molekulargewichte sind besonders vorteilhaft, da diese Polyole kommerziell leicht verfügbar sind. Besonders bevorzugt sind Molekulargewichte von 4 000 -10000 g/mol (Dalton). Ganz besonders bevorzugt werden Polyoxyalkylene, insbesondere Polyethylenoxide oder Polypropylenoxide, eingesetzt, die eine Polydispersität PD von weniger als 2, bevorzugt weniger als 1,5 aufweisen.

Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC, auch: SEC) bestimmt werden. Dieses Verfahren ist dem Fachmann bekannt. Die Polydispersität leitet sich aus den mittleren Molekulargewichten M_{w} und Mₙ ab. Sie wird berechnet als PD = M_{w}/Mₙ.

Besonders vorteilhafte viskoelastische Eigenschaften lassen sich erreichen, wenn man als polymere Grundgerüste Polyoxyalkylenpolymere, welche eine enge Molmassenverteilung und damit niedrige Polydispersität besitzen, einsetzt. Diese sind beispielsweise durch die so genannte Double-Metal-Cyanide-Katalyse (DMC-Katalyse) herstellbar. Diese Polyoxyalkylenpolymere zeichnen sich durch eine besonders enge Molmassenverteilung, durch eine hohe mittlere Molmasse und durch eine sehr niedrige Zahl an Doppelbindungen an den Enden der Polymerketten aus.
Solche Polyoxyalkylenpolymere haben eine Polydispersität PD (M_{w}/Mₙ) von höchstens 1,7. Besonders bevorzugte organische Grundgerüste sind beispielsweise Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.

Gegebenenfalls kann die obengenannte Polyolverbindung in einer vorgelagerten Reaktion mit einem Diisocyanat bei einem stöchiometrischen Überschuss der Polyolverbindungen gegenüber der Diisocyanatverbindung zu einem Polyurethan-Prepolymer umgesetzt werden, das Hydroxyl-terminiert ist. Die Gruppierung A in Formel (1) enthält in diesem Fall neben den Polyethergruppen Urethangruppierungen in der Polymerkette. Hierdurch stehen für die Folgereaktion besonders hochmolekulare α, w- difunktionelle Polyole zur Verfügung.

Als α, w- difunktionelle organische Polymere der Formel X-A-X können für X gleich -NCO α, w-difunktionelle Polyole der oben genannten Art mit einem Diisocyanat bei einem stöchiometrischen Überschuss der Diisocyanatverbindung gegenüber den Polyolverbindungen bzw. gegenüber den OH-Gruppen der Polyolverbindung(en) zu einem Polyurethan-Prepolymer umgesetzt werden, das Isocyanat-terminiert ist. Die Gruppierung A in Formel (1) enthält in diesem Fall in der Regel neben den Polyethergruppen noch Urethangruppierungen in der Polymerkette. Durch die Wahl des stöchiometrischen Überschusses der Diisocyanatverbindung kann das Molekulargewicht des α,ω-diisocyanatotermimierten Polymers X-A-X in weiten Grenzen variiert werden und den Erfordernissen der geplanten Anwendung angepasst werden.

Wie bereits oben ausgeführt, werden die Polyolverbindungen X-A-X mit organofunktionellen Silanen vom Typ Y-R-Si-(R¹)m(-OR²)₃₋ₘ umgesetzt, wobei Y in diesem Fall eine Isocyanatgruppe ist.
Beispiele für den zweiwertigen Rest R sind Alkylenreste, Methylen-, Ethylen-, n-Propylen-, isoPropylen-, n-Butylen-, iso-Butylen-, tert.-Butylen-, n-Pentylen-, iso-Pentylen-, neo-Pentylen-, tert.-Pentylenrest, n-Hexylenrest, n-Heptylenrest, n-Octylenrest, iso-Octytenreste, 2,2,4-Trimethylpentylenrest, n-Nonylenrest, n-Decylenrest, n-Dodecylenrest; Alkenylenreste, wie der Vinylen- und der Allylenrest; Cycloalkylenreste, wie Cyclopentylen-, Cyclohexylen-, Cycloheptylenreste und Methylcyclohexylenreste; Arylenreste, wie der Phenylen- und derNaphthylenrest; Alkarylenreste, wie o-, m-, p-Tolylenreste, Xylylenreste und Ethylphenylenreste; Aralkylenreste, wie der Benzylenrest, der α- und der β-Phenylethylenrest.

Besonders bevorzugt sind für R zweiwertige Kohlenwasserstoffreste mit 1 bis 3 Kohlenstoffatomen. Insbesondere Verbindungen mit R = Methylen weisen eine hohe Reaktivität der abschließenden Silylgruppen auf, was zur Verkürzung der Abbinde- und Härtungszeiten beiträgt. Wird für R eine Propylengruppe gewählt, so weisen diese Verbindungen eine besonders hohe Flexibilität auf. Diese Eigenschaft wird der längeren verbindenden Kohlenstoffkette zwischen dem über Y gebundenen polymeren Grundgerüst und abschließender Silylgruppe zugeschrieben, da Alkylengruppen allgemein flexibel und beweglich sind.

Bei den Resten R¹ und R² handelt es sich vorzugsweise jeweils unabhängig voneinander um einen Kohlenwasserstoffrest mit 1 bis 6 Kohlenstoffatomen, besonders bevorzugt um einen Alkylrest mit 1 bis 4 Kohlenstoffatomen, insbesondere um den Methylrest oder Ethylrest. Verbindungen mit Alkoxysilylgruppen weisen je nach Natur der Reste R² unterschiedliche Reaktivitäten bei chemischen Reaktionen auf. Dabei weist innerhalb der Alkoxygruppen die Methoxygruppe die größte Reaktivität auf, höhere aliphatische Reste wie Ethoxy und verzweigte oder zyklische Reste wie Cyklohexyl bewirken eine deutlich geringe Reaktivität der abschließenden Alkoxysilylgruppe. Es können jedoch auch Kohlenwasserstoffreste ausgewählt aus n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, Heptylreste, Octylreste, wie der n-Octylrest und iso-Octylreste, wie der 2,2,4-Trimethylpentylrest, Nonylreste, Decylreste, Dodecylreste, Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest Verwendung finden.

In einer speziellen Ausführungsform der vorliegenden Erfindung hat m in der Formel (2) den Wert 0 oder 1, so dass Tri- bzw. Dialkoxysilylgruppen vorliegen. Der besondere Vorteil von Dialkoxysilylgruppen liegt darin, dass die entsprechenden Zusammensetzungen nach der Aushärtung elastischer, weicher sind als Trialkoxysilylgruppen enthaltende Systeme. Sie sind deshalb insbesondere für eine Anwendung als Dichtstoffe geeignet. Darüber hinaus spalten sie bei der Aushärtung weniger Alkohol ab und bieten deshalb auch unter physiologischen Gesichtspunkten einen Anwendungsvorteil. Mit Trialkoxysilylgruppen hingegen lässt sich ein höherer Vernetzungsgrad erreichen, was besonders vorteilhaft ist, wenn nach der Aushärtung eine harte, feste Masse gewünscht wird. Darüber hinaus sind Trialkoxysilylgruppen reaktiver, vernetzen also schneller und senken somit die benötigte Menge an Katalysator, und sie weisen Vorteile beim "kalten Fluss" auf.

Besonders geeignet sind die nachfolgend aufgeführten Isocyanatosilane:
Methyldimethoxysilylmethylisocyanat, Ethyldimethoxysilylmethylisocyanat, Methyldiethoxysilylmethylisocyanat, Ethyldiethoxysilylmethylisocyanat, Methyldimethoxysilylethylisocyanat, Ethyldimethoxysilylethylisocyanat, Methyldiethoxysilylethylisocyanat, Ethyldiethoxysilylethylisocyanat, Methyldimethoxysilylpropylisocyanat, Ethyldimethoxysilylpropylisocyanat, Methyldiethoxysilylpropylisocyanat, Ethyldiethoxysilylpropylisocyanat, Methyldimethoxysilylbutylisocyanat, Ethyldimethoxysilylbutylisocyanat, Methyldiethoxysilylbutylisocyanat, Diethylethoxysilylbutylisocyanat, Ethyldiethoxysilylbutylisocyanat, Methyldimethoxysilylpentylisocyanat, Ethyldimethoxysilylpentylisocyanat, Methyldiethoxysilylpentylisocyanat, Ethyldiethoxysilylpentylisocyanat, Methyldimethoxysilylhexylisocyanat, Ethyldimethoxysilylhexylisocyanat, Methyldiethoxysilythexylisocyanat, Ethyldiethoxysilylhexylisocyanat, Trimethoxysilylmethylisocyanat, Triethoxysilylmethylisocyanat, Trimethoxysilylethylisocyanat, Triethoxysilylethylisocyanat, Trimethoxysilylpropylisocyanat (z.B. GF 40, Fa. Wacker), Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat.

Besonders bevorzugt werden Methyldimethoxysilylmethylisocyanat, Methyldiethoxysilylmethylisocyanat, Methyldimethoxysilylpropylisocyanat und Ethyldimethoxysilylpropylisocyanat oder deren Trialkoxyanaloga.

Das oder die Isocyanatosilan(e) werden dabei in mindestens stöchiometrischer Menge zu den Hydroxylgruppen des Polyols eingesetzt, bevorzugt wird jedoch ein geringer stöchiometrischer Überschuss der Isocyanatosilane gegenüber den Hydroxylgruppen des Polyols. Dieser stöchiometrische Überschuss beträgt zwischen 0,5 und 10, vorzugsweise zwischen 1,2 und 2 Equivalente Isocyanatgruppen bezogen auf die Hydroxylgruppen.

Zur erfindungsgemäß alternativen Herstellung des organyloxysilylterminierten Polymeren P¹ aus einem α,ω-diisocyanatotermimierten Polymer X-A-X mit X gleich -NCO kommen organofunktionelle Silane der Formel Y-R-Si-(R¹)ₘ(-OR²)₃₋ₘ mit Y gleich -OH oder-NR¹ zum Einsatz.
Beispiele für aminofunktionelle Silane sind 3-Aminopropyltrimethoxysilan, 3-Aminopropyltriethoxysilan, N-2-Aminoethyl-3-aminopropyltrimethoxysilan, N-2-Aminoethyl-3-aminopropyltriethoxysilan, N-(β-aminoethyl)aminopropylmethyldiethoxysilan und N-(β-aminoethyl)aminopropylmethyldimethoxysilan. Beispiele für hydroxyfunktionelle Silane sind Umsetzungsprodukte der vorgenannten aminofunktionellen Silane mit cyclischen Carbonaten, wie sie in der WO96/38453 beschrieben sind oder analoge Umsetzungsprodukte von aminofunktionellen Silanen mit Lactonen. Vorzugsweise werden die hydroxyfunktionellen Silane durch Umsetzung des entsprechenden Aminosilans mit primären oder sekundären Aminogruppen mit einem Carbonat, ausgewählt aus Ethylencarbonat, Propylencarbonat, Butylencarbonat oder einem Lacton, ausgewählt aus Propiolacton, Butyrolacton oder Caprolacton hergestellt.

Es ist notwendig, dass pro Isocyanatgruppe des Prepolymers mit endständigen Isocyanatgruppen mindestens ein Molekül des hydroxy- oder aminofunktionellen Silans verwendet wird, vorzugsweise wird das Silan im geringen stöchiometrischen Überschuss eingesetzt.

Die für den ersten Schritt zur Herstellung des organyloxysilylterminierten Polymeren P¹ eingesetzten Kalium-, Eisen-, Indium-, Zink-, Wismut- und Kupferverbindungen als Katalysatoren (A) werden vorzugsweise ausgewählt aus der Gruppe bestehend aus Carboxylaten (Salze aliphatischer Carbonsäuren) oder Acetylacetonaten des Kaliums, Eisens, Indiums, Zinks, Wismuts oder Kupfers.

Als aliphatische Carbonsäuren können insbesondere C₄ bis C₃₆ gesättigte, einfach oder mehfach ungesättigte Monocarbonsäuren Verwendung finden. Beispiele hierfür sind: Arachinsäure (n-Eicosansäure), Arachidonsäure (all-cis-5,8,11,14-Eicosatetraensäure), Behensäure (Docosansäure), Buttersäure (Butansäure), Caproleinsäure (9-Decensäure), Caprinsäure (n-Decansäure), Capronsäure (n-Hexansäure), Caprylsäure (n-Octansäure), Cerotinsäure (Hexacosansäure), Cetoleinsäure (cis-11-Docosensäure), Clupanodonsäure (all-cis-7,10,13,16,19-Dokosapentaensäure), Eleostearinsäure (trans-9-trans-11-cis-13-octadeca-9,11,13-triensäure), Enanthsäure (1-Hexancarbonsäure), Erucasäure (cis-13-Docosensäure), Gadoleinsäure (9-Eicosensäure), Gondölsäure (cis-11-Eicosensäure), Hiragonsäure (6,10,14-Hexadecatriensäure), Laurinsäure (Dodecansäure), Lignozerinsäure (Tetracosansäure), Linderasäure (cis-4-Dodecensäure), Linolsäure ((cis,cis)-Octadeca-9,12-diensäure), Linolensäure ((all-cis)-Octadeca-9,12,15-triensäure), Melissinsäure (Triacontansäure), Montansäure (Octacosansäure), Stearidonsäure (cis-6-cis-9-cis-12-cis-15-Octadecatetraensäure), Myristinsäure (Tetradecansäure), Myristoleinsäure (cis-9-Tetradecensäure), Naphtensäure, Neodecansäure, Obtusilinsäure (cis-4-Decensäure), Caprylsäure (n-Octansäure), Neooctansäure, Ölsäure (cis-9-Octadecensäure), Palmitinsäure (n-Hexadecansäure), Palmitölsäure (cis-9-Hexadecensäure), Parinarsäure (9,11,13,15-Octadecatetraensäure), Petroselinsäure (cis-6-Octadecensäure), Physetsäure (5-Tetradecensäure), Punicasäure (cis-9-trans-11-cis-13-Octadeca-9,11,13-triensäure), Scoliodonsäure (cis-5-cis-11-cis-14-Eicosatriensäure), Selacholeinsäure (15-Tetracosensäre), Stearinsäure (n-Octadecansäure), Tricosansäure, Tsuzuinsäure (cis-4-Tetradecensäure), trans-Vaccensäure (trans-11-Octadecensäure), Palmitoleinsäure (9-Hexadecensäure).
Außer den Acetylacetonaten können auch noch Chelate anderer β-Dicarbonylverbindungen des Kaliums, Eisens, Indiums, Zinks, Wismuts oder Kupfers eingesetzt werden. Konkret genannt seien Acetessigsäuralkylester, Dialkylmalonate, Benzoylessigester, Dibenzoylmethan, Benzoylaceton, Dehydroacetessigsäure.
Die Katalysatoren (A) werden in Mengen von 0,01 bis 3,0 Gewichtsteilen, bezogen auf 100 Gewichtsteile Polymer P¹, eingesetzt. Die Umsetzung erfolgt dabei vorzugsweise bei Temperaturen von 0 bis 150°C, besonders bevorzugt bei 25 bis 100 °C und einem Druck der umgebenden Atmosphäre, also etwa 900 bis 1100 hPa.

Die so hergestellten organyloxysilylterminierten Polymeren P¹ sind stabil gegen Luftfeuchtigkeit und können besonders vorteilhaft zur Herstellung und Verwendung von einkomponentigen, feuchtigkeitshärtenden Klebstoffen, Dichtstoffen oder Beschichtungsmitteln verwendet werden. Hierzu werden den organyloxysilylterminierten Polymeren P¹ in einem zweiten Schritt Silan-Kondensationskatalysatoren (B) zugesetzt. Diese Silan-Kondensationskatalysatoren sind ausgewählt aus der Gruppe bestehend aus Verbindungen von Elementen der dritten Hauptgruppe des Periodensystems der Elemente und heterocyclischen organischen Aminen, Aminkomplexen der Elementverbindungen oder deren Mischungen. Im Wesentlichen sind die Silan-Kondensationskatalysatoren (B) also eine Kombination von mindestens einer Verbindung, die mindestens ein Element der dritten Hauptgruppe des Periodensystems der Elemente enthält, mit mindestens einem heterocyclischen organischen Amin und/oder mindestens ein Aminkomplex von mindestens einer Verbindung, die mindestens ein Element der dritten Hauptgruppe des Periodensystems der Elemente enthält. Unter einer Kombination werden im Sinne der vorliegenden Erfindung sowohl das Nebeneinandervorliegen der Jeweiligen Elementverbindung und eines Amins als auch Molekülverbindungen jeglicher Art zwischen Elementverbindung und Amin verstanden, wobei eine Molekülverbindung als Zusammenlagerung von mindestens zwei Molekülen auf der Basis von Nebenvalenzbindungen wie Van-der-Waals-Kräfte, Dipolorientierung, Wasserstoffbrückenbindung und dergleichen zu verstehen ist. Der Begriff "Komplex" kann im Kontext der vorliegenden Erfindung mit "Molekülverbindung" gleichgesetzt werden. Die dritte Hauptgruppe des Periodensystems umfasst im Sinne der vorliegenden Erfindung das Element Bor.

In einer besonders bevorzugten Ausführungsform der vorliegenden Erfindung sind die Silan-Kondensationskatalysatoren (B) mindestens eine Komplexverbindung enthaltend Bor und ein Amin.

Beispiele für einsetzbare heterocyclische organische Amine sind N-Methylpyrrolidin, N-Methylpiperidin, N,N-Dimethylpiperazin, Diaza-bicyclo-octan (DABCO), N-(2-hydroxyethoxyethyl)-2-azanorbornan, 1,8-Diazadicyclo(5.4.0)undecen-7 (DBU), N-Dodecyl-2-Methylimidazol, N-Methylimidazol, 2-Ethyl-2-Methylimidazol, N-Methylmorpholin, Bis(2-(2,6-dimethyl-4-morpholino)ethyl)-(2-(4-morpholino)ethyl)amin, Bis(2-(2,6-dimethyl-4-morpholino)ethyl)-(2-(2,6-diethyl-4-morpholino)ethyl)amin, Tris(2-(4-morpholino)ethyl)amin, Tris(2-(4-morpholino)propyl)amin, Tris(2-(4-morpholino)butyl)amin, Tris(2-(2,6-dimethyl-4-morpholino)ethyl)amin, Tris(2-(2,6-diethyl-4-morpholino)ethyl)amin, Tris(2-(2-methyl-4-morpholino)ethyl)amin, Tris(2-(2-ethyl-4-morpholino)ethyl)amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon, N-Morpholinopropyl-N'-methyl-piperazin, Dimorpholinodiethylether (DMDEE) oder Di-2,6-dimethylmorpholinoethyl)ether.

Neben den vorgenannten heterocyclischen Aminen sind erfindungsgemäß bevorzugt auch Aminkomplexe aus Borhalogeniden, insbesondere Bortrifluorid, oder Boralkylen als Silan-Kondensationskatalysatoren (B) einsetzbar. Als Aminkomponente eignen sich hierbei sowohl die vorgenannten heterocyclischen Amine als auch einfache niedere Alkylamine oder Diamine, konkret genannt seien hier Ethylamin, Propylamin, Butylamin sowie die an anderer Stelle genannten Aminosilane.

Beispielsweise werden die eingesetzten Silan- Kondensationskatalysatoren (B) ausgewählt aus der Gruppe Borhalogenide oder Boralkyle, Aminkomplexe von Borhalogeniden oder Boralkylen oder Mischungen der vorgenannten Verbindungen und / oder Komplexe.

Die Silan-Kondensationskatalysatoren (B) werden in Mengen von 0,01 bis 3,0 Gewichtsteilen, bezogen auf 100 Gewichtsteile Polymer P¹, eingesetzt. Die Umsetzung erfolgt dabei vorzugsweise bei Temperaturen von 0 bis 150°C, bevorzugt bei 10 bis 100 und besonders bevorzugt bei 25 bis 100 °C und einem Druck der umgebenden Atmosphäre, also etwa 900 bis 1100 hPa.

Die erfindungsgemäßen Kleb- und Dichtstoff-Zubereitungen können neben den vorgenannten organyloxysilylterminierten Polymeren P¹ noch weitere Hilfs- und Zusatzstoffe enthalten, die diesen Zubereitungen verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester (z.B. "Mesamoll", Alkylsulfonsäurephenylester, Fa. Bayer), Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester der Abietinsäure.

Beispielsweise eignen sich von den Phthalsäureestem Dioctylphthalat (DOP), Dibutylphthalat, Diisoundecylphthalat (DIUP) oder Butylbenzylphthalat (BBP) oder deren abgeleitete hydrierte Derivate, von den Adipaten Dioctyladipat (DOA), Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Unter "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole wie z.B. Tinuvin 327 (Fa. Ciba Specialty Chemicals) und/oder Amine vom "HALS"-Typ (Hindered Amine Light Stabilizer), wie z.B. Tinuvin 770 (Fa. Ciba Specialty Chemicals). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Die erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Flint, Glimmer, Glaspulver und andere gemahlene Mineralstoffe. Weiterhin können auch organische Füllstoffe eingesetzt werden, insbesondere Ruß, Graphit, Holzfasern. Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasem wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydriertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 1 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen. Es besteht gelegentlich auch Bedarf, die Viskosität des erfindungsgemäßen Kleb- oder Dichtstoffs für bestimmte Anwendungen durch Verwendung eines Reaktiwerdünners zu erniedrigen. Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Als Reaktiwerdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, Methyltrimethoxysilan, Methyltriethoxysilan sowie Vinyltrimethoxysilan (Dynasylan VTMO, Fa. Evonik oder Geniosil XL 10, Fa. Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan, Aminosilane wie z.B. 3-Aminopropyltrimethoxysilan (Dynasylan AMMO, Fa. Evonik oder Geniosil GF96, Fa. Wacker), Bis(trimethoxysilylpropyl)amin (Silquest® A1170, GE Silicones) und Teilhydrolysate der vorgenannten Verbindungen.

Eine Vielzahl der vorgenannten silanfunktionellen Reaktiwerdünner haben gleichzeitig eine trocknende und / oder haftvermittelnde Wirkung in der Zubereitung. Diese Reaktiwerdünner werden in Mengen zwischen 0,1 und 15 Gew.%, vorzugsweise zwischen 1 und 5 Gew.%, bezogen auf die Gesamtzusammensetzung der Zubereitung eingesetzt.

Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb- / Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.%, bezogen auf die Gesamtzusammensetzung der Zubereitung verwendet.

Die Herstellung der erfindungsgemäßen Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Eine bevorzugte Ausführungsform der erfindungsgemäßen Zubereitung kann enthalten:
- 5 bis 50 Gew.-%, bevorzugt 10 bis 40 Gew.-% einer oder mehrerer Verbindungen der erfindungsgemäßen organyloxysilylterminierten Polymeren P¹,
- jeweils 0,01 bis 3,0 Gewichtsteile, bezogen auf 100 Gewichtsteile Polymer P¹, des Katalysators (A) und des Silan-Kondensationskatalysators (B),
- 0 bis 30 Gew.-%, bevorzugt weniger als 20 Gew.-%, besonders bevorzugt weniger als 10 Gew.-% Weichmacher,
- 0 bis 80 Gew.-%, bevorzugt 20 bis 60 Gew.-%, besonders bevorzugt 30 bis 55 Gew.-% Füllstoffe.
Ferner kann die Zubereitung weitere Hilfs- und Zusatzstoffe enthalten.

Die Gesamtheit aller Bestandteile summiert sich zu 100 Gew.-%, wobei sich die Summe der oben aufgeführten Hauptbestandteile allein nicht zu 100 Gew.-% addieren muss.

Die erfindungsgemäßen Zubereitungen härten mit der umgebenden Luftfeuchtigkeit zu niedermoduligen polymeren Massen aus, so dass sich diese als niedermodulige, feuchtigkeitshärtende Kleb- und Dichtstoffzubereitungen und Beschichtungsmittel eignen, die frei von organischen Zinnverbindungen sind. Ein weiterer Gegenstand der vorliegenden Erfindung ist daher die Verwendung einer Zubereitung, enthaltend ein oder mehrere silanfunktionelle Polymere P¹ und herstellbar nach einem erfindungsgemäßen Verfahren, als Klebstoff, Dichtstoff oder Beschichtungsmittel.

In dem nachfolgenden Ausführungsbeispiel soll die Erfindung näher erläutert werden, wobei die Auswahl des Beispiels keine Beschränkung des Umfangs des Erfindungsgegenstandes darstellen soll.

### Beispiele

### Herstellung der Polymeren

282 g (15 mmol) Polypropylenglykol 18000 (OHZ=6,0) wurden in einem 500 ml Dreihalskolben bei 100°C im Vakuum getrocknet. Unter Stickstoffatmosphäre wurde bei 80°C 0,1 g Bismutcarboxylat (Borchi Kat 24, FA. Borchers) hinzugegeben und anschließend mit 7,2 g (32 mmol) 3-Isocyanatopropyltrimethoxysilan (%NCO=18,4) versetzt. Nach einstündigem Rühren bei 80°C wurde das entstandene Polymer abgekühlt und mit 6 g Vinyltrimethoxysilan versetzt.

### Eigenschaften der Polymerfilme

In einer Aluschale mit einem Durchmesser von 50 mm wurden 5g Prepolymer mit 0,05g AMMO und 0,05g A1170 sowie 0,025g des jeweiligen Katalysators vermischt. Von diesen Mischungen wurden Hautbildungszeit (Skin over time / SOT) und die Zeit zur Ausbildung einer klebfreien Schicht (Tack free time / TFT) (jeweils bei 23°C, 50% relative Luftfeuchtigkeit) ermittelt. Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (E-Module bei 50% Dehnung, Bruchdehnung und Zugfestigkeit ("Bruchkraft") in Anlehnung an DIN EN 27389 und DIN EN 28339 bestimmt.
Wie aus den in der nachfolgenden Tabelle 1 zusammengestellten Ergebnissen ersichtlich ist, lässt sich mit den erfindungsgemäßen Polymerzusammensetzungen SOT/ TFT in weiten Grenzen den Erfordernissen anpassen, die mechanischen Eigenschaften der zinnfreien erfindungsgemäß hergestellten Polymerfilme sind den zinnhaltigen gemäß dem Stand der Technik zumindest ebenbürtig.

**Tabelle 1**

| **Beispiel** | 1 (Vergleich) | **2°** | **3*** | **4*** | **5°** |
|---|---|---|---|---|---|
| Katalysator | DBTL | Mischung¹⁾ aus Ti/DBU je 1 % | Bortrifluorid / Ethylamin Komplex 95% | Bortrifluorid / GF96 Komplex | Mischung²⁾ aus AI/DBU je 1 % |
| SOT/TFT | 30 min | 15 min | 5 h | 5 h | 20 |
| Bruchkraft [N/mm²] | 0,62 | 0,61 | 0,67 | 0,76 | 0,59 |
| Dehnung [%] | 49 | 66 | 54 | 68 | 56 |
| E-50 Modul [N/mm²] | 0,66 | 0,52 | 0,63 | 0,64 | 0,60 |

| | | | | | |
|---|---|---|---|---|---|
| Anmerkungen: 1) Als Ti-Verbindung wurde Titanium(di-i-propoxide)bis(acetylacetonate) verwendet. * erfindungsgemäß o nicht-erfindungsgemäß 2) Als Al-Verbindung wurde Aluminiumtris(acetylacetonate) verwendet. | | | | | |

Allgemeine Vorschrift zur Herstellung der härtbaren Kleb-/Dichtstoff-Zubereitungen:
27,40 Gewichtsteile der Polymermischung wurden in einem Rührkessel mit 15 Gewichtsteilen Mesamoll mittels eines Speedmixers 30 s innig vermengt.
In die so erhaltene Mischung wurden nacheinander 45,05 Gewichtsteile Calciumcarbonat (Omya 302, "ultrafine ground calcium carbonate"), 1,5 Teile Vinyltrimethoxysilan ("VTMO", Wacker Geniosil XL10), 1,0 Gewichtsteile 3-Aminopropyltrimethoxisilan ("AMMO", Wacker Geniosil GF96) sowie 0,05 Gewichtsteile Katalysator eingebracht und das so entstandene Gemenge für 30 s in einem Speedmixer innig vermischt.
Als Katalysatoren wurden verwendet:
   Katalysator 1: DBTL (Vergleich)
   Katalysator 2: Ti/DBU je 1% (siehe Anmerkung 1 bei Tabelle 1) (nicht-erfindungsgemäß)
   Katalysator 3: Bortrifluorid / Ethylamin Komplex 95% (erfindungsgemäß)
   Katalysator 4: Bortrifluorid / GF96 Komplex (erfindungsgemäß)
   Katalysator 5: Mischung²⁾ aus Al/DBU je 1 % (siehe Anmerkung 2 bei Tabelle 1) (nicht-erfindungsgemäß)

### Prüfbedingungen

Von diesen Mischungen wurden Zugscherfestigkeiten an Holz/Holz-, Holz/Aluminium- und Holz/PMMA- Verklebungen ermittelt ("Festigkeiten"). Die verklebten Prüfkörper wurden vor dem Zugversuch 7 Tage im Normklima (23°C, 50% relative Luftfeuchtigkeit) gelagert.
Weiterhin wurden die oben genannten Mischungen mit einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (E-Module bei 50 und 100% Dehnung, Bruchdehnung, Zugfestigkeit und Rückstellvermögen) in Anlehnung an DIN EN 27389 und DIN EN 28339 bestimmt.

**Tabelle 2 Montagekleberformulierungen**

| **Beispiel** | **6** | **7** | **8** | **9** | **10** |
|---|---|---|---|---|---|
| Polymer PPG18k | 27,40 | 27,40 | 27,40 | 27,40 | 27,40 |
| Mesamoll | 15,00 | 15,00 | 15,00 | 15,00 | 15,00 |
| Omyabond 302 | 55,05 | 55,05 | 55,05 | 55,05 | 55,05 |
| VTMO XL 10 | 1,50 | 1,50 | 1,50 | 1,50 | 1,50 |
| AMMO GF 96 | 1,00 | 1,00 | 1,00 | 1,00 | 1,00 |
| Katalysator 1 | 0,05 | | | | |
| Katalysator 2 | | 0,05 | | | |
| Katalysator 3 | | | 0,05 | | |
| Katalysator 4 | | | | 0,05 | |
| Katalysator 5 | | | | | 0,05 |
| Film Methode: | | | | | |
| SOT [min] | 24 | 22 | 48 | 36 | 30 |
| TFT [h] | < 24 | < 24 | < 24 | < 24 | <24 |
| Bruch [N/mm²] | 3,10 | 2,95 | 2,99 | 2,7 | 3,01 |
| Dehnung [%] | 138 | 145 | 130 | 140 | 145 |
| E- 50 [N/mm²] | 1,72 | 1,8 | 1,6 | 1,68 | 1,75 |
| E- 100 [N/mm²] | 2,75 | 2,8 | 2,6 | 2,75 | 2,8 |
| Festigkeiten [N/mm²] | | | | | |
| Holz-Holz | 5,04 | 5,2 | 5,12 | 5,3 | 5,01 |
| Holz-Aluminium | 2,49 | 2,8 | 2,9 | 3,02 | 2,98 |
| Holz-PMMA | 0,5 | 1,3 | 0,64 | 0,99 | 1,02 |

Die erfindungsgemäßen Zusammensetzungen weisen zwar gegenüber DBTL-haltigen Zubereitungen zum Teil eine geringfügig verlängerte SOT auf, in Bezug auf die wichtigen Eigenschaften TFT, Dehnung sowie Zugscherfestigkeiten bei Verklebungen weisen sie mindestens ebenbürtige, z. T. verbesserte mechanische Eigenschaften auf. Wesentlicher Vorteil der erfindungsgemäßen Zusammensetzungen gegenüber den Zubereitungen nach Stand der Technik (Beispiel1) ist die Abwesenheit von organischen Zinnverbindungen.

## Patentansprüche

1. Verfahren zur Herstellung vernetzbarer Zubereitungen, **dadurch gekennzeichnet, dass** in einem ersten Schritt α, ω-difunktionelle organische Polymere der Formel (1)
X-A-X (1)
mit organofunktionellen Silanen der Formel (2)
Y-R-Si-(R¹)ₘ(-OR²)₃₋ₘ (2)
in Anwesenheit von Katalysatoren (A), ausgewählt aus der Gruppe bestehend aus Kalium-, Eisen-, Indium-, Zink-, Wismut- und Kupferverbindungen, zu organyloxysilylterminierten Polymeren P¹ umgesetzt werden, wobei
R ein zweiwertiger, gegebenenfalls substituierter Kohlenwasserstoffrest mit 1 bis 12 Kohlenstoffatomen bedeutet, der mit Heteroatomen unterbrochen sein kann,
R¹ gleich oder verschieden sein kann und einwertige, gegebenenfalls substituierte Kohlenwasserstoffreste mit 1 bis 12 Kohlenstoffatomen, die mit Heteroatomen unterbrochen sein können, bedeutet,
R² gleich oder verschieden sein kann und einwertige, gegebenenfalls substituierte Kohlenwasserstoffreste mit 1 bis 12 Kohlenstoffatomen, die mit Heteroatomen unterbrochen sein können, bedeutet, A einen zweiwertigen, gegebenenfalls substituierten Kohlenwasserstoffrest mit mindestens 6 Kohlenstoffatomen bedeutet, der mit Heteroatomen unterbrochen sein kann, und
m gleich 0,1 oder 2 ist,
X eine Hydroxylgruppe und Y eine Isocyanatgruppe oder X eine Isocyanatgruppe und Y eine Hydroxylgruppe oder eine primäre oder sekundäre Aminogruppe ist, und
in einem zweiten Schritt
die im ersten Schritt erhaltenen Polymere P¹ mit einem Silan-Kondensationskatalysator (B) ausgewählt aus der Gruppe bestehend aus Verbindungen von Elementen der dritten Hauptgruppe und heterocyclischen organischen Aminen, Aminkomplexe der Elementverbindungen oder deren Mischungen, sowie gegebenenfalls weiteren Stoffen (C) vermischt werden, wobei die Zubereitungen frei von organischen Zinnverbindungen sind,
**dadurch gekennzeichnet, dass** für die eingesetzten Silan- Kondensationskatalysatoren (B) Borverbindungen verwendet werden.

2. Verfahren nach Anspruch 1, **dadurch gekennzeichnet, dass** es sich bei den organischen Polymeren der Formel (1) um Polymerverbindungen auf der Basis von Polyethern oder Polyestern handelt.

3. Verfahren nach Anspruch 1 oder 2, **dadurch gekennzeichnet, dass** m in der Formel (2) den Wert 0 oder 1 hat.

4. Verfahren nach einem oder mehreren der Ansprüche 1 bis 3, **dadurch gekennzeichnet, dass** es sich bei dem eingesetzten Katalysator (A) um Carboxylate oder Acetylacetonate des Kaliums, Eisens, Indiums, Zinks, Wismuts oder Kupfers handelt.

5. Verfahren nach einem oder mehreren der Ansprüche 1 bis 4, **dadurch gekennzeichnet, dass** die eingesetzten Silan- Kondensationskatalysatoren (B) ausgewählt werden aus der Gruppe Borhalogenide oder Boralkyle, Aminkomplexe von Borhalogeniden oder Boralkylen oder Mischungen der vorgenannten Verbindungen und / oder Komplexe.

6. Verfahren gemäß einem oder mehreren der Ansprüche 1 bis 5, **dadurch gekennzeichnet, dass** der Silan- Kondensationskatalysator (B) in Mengen von 0,01 bis 3,0 Gewichtsteilen, bezogen auf 100 Gewichtsteile Polymer P¹, eingesetzt wird.

7. Verfahren gemäß einem oder mehreren der Ansprüche 1 bis 6, **dadurch gekennzeichnet, dass** die gegebenenfalls weiteren eingesetzten Stoffe (C) ausgewählt werden aus Füllstoffen, Vemetzem, Weichmachern sowie weiteren Hilfs- und Zusatzstoffen oder deren Mischungen.

8. Verfahren gemäß einem oder mehreren der Ansprüche 1 bis 7, **dadurch gekennzeichnet, dass** der zweite Schritt bei Temperaturen von 10 bis 100°C und einem Druck der umgebenden Atmosphäre, also etwa 900 bis 1100 hPa, durchgeführt wird.

9. Verwendung einer Zubereitung enthaltend ein oder mehrere organyloxysilylterminierte Polymere P¹ herstellbar nach mindestens einem der Ansprüche 1 bis 8 als einkomponentiger, feuchtigkeitshärtender Klebstoff, Dichtstoff oder Beschichtungsmittel, wobei den organyloxysilylterminierten Polymeren P¹ Silan-Kondensationskatalysatoren (B) gemäß einem der Ansprüche 1 bis 8 zugesetzt werden.

## Claims

1. A method for manufacturing crosslinkable preparations, **characterized in that** in a first step, α,ω-difunctional organic polymers of formula (1)
X-A-X (1)
are reacted with organofunctional silanes of formula (2)
Y-R-Si-(R¹)m(-OR²)₃₋ₘ (2),
in the presence of catalysts (A) selected from the group consisting of compounds of potassium, iron, indium, zinc, bismuth, and copper, to yield organyloxysilyl-terminated polymers P¹, wherein
R denotes a divalent, optionally substituted hydrocarbon residue having 1 to 12 carbon atoms, which can be interrupted by heteroatoms,
R¹ can be the same or different, and denotes monovalent, optionally substituted hydrocarbon residues having 1 to 12 carbon atoms, which can be interrupted by heteroatoms,
R² can be the same or different, and denotes monovalent, optionally substituted hydrocarbon residues having 1 to 12 carbon atoms, which can be interrupted by heteroatoms, A denotes a divalent, optionally substituted hydrocarbon residue having at least 6 carbon atoms, which can be interrupted by heteroatoms, and
m is equal to 0, 1, or 2,
X is a hydroxyl group and Y is an isocyanate group, or X is an isocyanate group and Y is a hydroxyl group or a primary or secondary amino group, and
in a second step,
the polymers P¹ obtained in the first step are mixed with a silane condensation catalyst (B) selected from the group consisting of compounds of elements of the third main group and heterocyclic organic amines, amine complexes of the element compounds, or mixtures thereof, and optionally with further substances (C), the preparations being free of organic tin compounds, **characterized in that** boron compounds are utilized for the silane condensation catalysts (B) that are used.

2. The method according to Claim 1, **characterized in that** the organic polymers of formula (1) are polymer compounds based on polyethers or polyesters.

3. The method according to Claim 1 or 2, **characterized in that** m in formula (2) has the value 0 or 1.

4. The method according to one or more of Claims 1 to 3, **characterized in that** the catalyst (A) that is used refers to carboxylates or acetylacetonates of potassium, iron, indium, zinc, bismuth, or copper.

5. The method according to one or more of Claims 1 to 4, **characterized in that** the silane condensation catalysts (B) that are used are selected from the group of boron halides or boron alkyls, amine complexes of boron halides or boron alkyls, or mixtures of the aforesaid compounds and/or complexes.

6. The method in accordance with one or more of Claims 1 to 5, **characterized in that** the silane condensation catalyst (B) is used in quantities from 0.01 to 3.0 parts by weight, based on 100 parts by weight of polymer P¹.

7. The method in accordance with one or more of Claims 1 to 6, **characterized in that** the further substances (C) optionally used are selected from fillers, crosslinkers, plasticizers, and further adjuvants and additives, or mixtures thereof.

8. The method in accordance with one or more of Claims 1 to 7, **characterized in that** the second step is carried out at temperatures from 10 to 100°C and at a pressure of the surrounding atmosphere, i.e. approximately 900 to 1100 hPa.

9. Use of a preparation containing one or more organyl oxysilyl-terminated polymers P¹, manufacturable according to at least one of Claims 1 to 8, as a one-component, moisture curable adhesive, sealant, or coating agent, wherein sinlane condensation catalysts (B) in accordance with one of claims 1 to 8 are added to the organyl oxysilyl-terminated polymers P.

## Revendications

1. Procédé pour la production de préparations réticulables, **caractérisé en ce que**, dans une première étape, on fait réagir des polymères organiques α,ω-difonctionnels répondant à la formule (1)
X-A-X (1)
avec des silanes organofonctionnels répondant à la formule (2)
Y-R-Si-(R¹)m(-OR²)₃₋ₘ (2),
en présence de catalyseurs (A) choisis parmi le groupe constitué par des composés de potassium, de fer, d'indium, de zinc, de bismuth et de cuivre, afin d'obtenir des polymères P¹ à terminaison organyloxysilyle, formules dans lesquelles
R représente un résidu d'hydrocarbure bivalent, le cas échéant substitué, contenant de 1 à 12 atomes de carbone, qui peut être interrompu avec des hétéroatomes ;
R¹ peut être identique ou différent et représente des résidus d'hydrocarbures monovalents, le cas échéant substitués contenant de 1 à 12 atomes de carbone, qui peuvent être interrompus avec des hétéroatomes ;
R² peut être identique ou différent et représente des résidus d'hydrocarbures monovalents, le cas échéant substitués contenant de 1 à 12 atomes de carbone, qui peuvent être interrompus avec des hétéroatomes; A représente un résidu d'hydrocarbure bivalent, le cas échéant substitué, contenant au moins 6 atomes de carbone, qui peut être interrompu avec des hétéroatomes ; et
m est égal à 0, 1 ou 2 ;
X représente un groupe hydroxyle et Y représente un groupe isocyanate ou bien X représente un groupe isocyanate et Y représente un groupe hydroxyle ou un groupe amino primaire ou secondaire, et
dans une deuxième étape, on mélange les polymères P¹ que l'on obtient à la première étape, avec un catalyseur de condensation des silanes (B) choisi parmi le groupe constitué par des composés des éléments du troisième groupe principal et des amines organiques hétérocycliques, des complexes d'amines des composés élémentaires ou leurs mélanges, et le cas échéant avec d'autres substances (C), les préparations étant exemptes de composés d'étain organiques,
**caractérisé en ce qu'**on utilise pour les catalyseurs de condensation des silanes (B) que l'on met en oeuvre, des composés du bore.

2. Procédé selon la revendication 1, **caractérisé en ce qu'**il s'agit, en ce qui concerne les polymères organiques répondant à la formule (1), de composés polymères à base de polyéthers ou de polyesters.

3. Procédé selon la revendication 1 ou 2, **caractérisé en ce que** m, dans la formule (2), prend la valeur 0 ou 1.

4. Procédé selon une ou plusieurs des revendications 1 à 3, **caractérisé en ce qu'**il s'agit, en ce qui concerne le catalyseur (A) mis en oeuvre, de carboxylates ou d'acétylacétonates du potassium, du fer, de l'indium, du zinc, du bismuth ou du cuivre.

5. Procédé selon une ou plusieurs des revendications 1 à 4, **caractérisé en ce que** les catalyseurs de condensation des silanes (B) mis en oeuvre sont choisis parmi le groupe des halogénures de bore ou des boroalkyle, des complexes d'amines d'halogénures de bore ou de boroalkyle ou encore des mélanges et/ou des complexes des composés susmentionnés.

6. Procédé selon une ou plusieurs des revendications 1 à 5, **caractérisé en ce que** le catalyseur de condensation des silanes (B) est mis en oeuvre dans des quantités de 0,01 à 3,0 parties en poids, rapportées à 100 parties en poids du polymère P¹.

7. Procédé selon une ou plusieurs des revendications 1 à 6, **caractérisé en ce que** les substances supplémentaires (C) le cas échéant mises en oeuvre sont choisies parmi des matières de charge, des agents de réticulation, des plastifiants, ainsi que d'autres substances auxiliaires et d'autres additifs ou leurs mélanges.

8. Procédé selon une ou plusieurs des revendications 1 à 7, **caractérisé en ce qu'**on effectue la deuxième étape à des températures de 10 à 100 °C et sous une pression atmosphérique ambiante, c'est-à-dire par exemple de 900 à 1100 hPa.

9. Utilisation d'une préparation contenant un ou plusieurs polymères P¹ à terminaison organyloxysilyle que l'on peut obtenir conformément à au moins une des revendications 1 à 8, à titre d'adhésif, de substance d'étanchéité ou d'agent d'enduction à un seul composant, durcissant en présence d'humidité, des catalyseurs de condensation des silanes (B) étant ajoutés aux polymères P¹ conformément à l'une quelconque des revendications 1 à 8.
